# EUROPÄISCHE PATENTSCHRIFT

(11) **EP 1 825 897 B1**
(45) Veröffentlichungstag und Bekanntmachung des Hinweises auf die Patenterteilung: **01.09.2010**
(21) Anmeldenummer: 07003581.1
(22) Anmeldetag: 21.02.2007
(51) Int. Cl.: B01D 35/027, F01M 11/00

(54) **Filteranordnung**
Filter assembly
Dispositif de filtration

(30) Priorität: 23.02.2006 DE 102006008498
(43) Veröffentlichungstag der Anmeldung: 29.08.2007
(73) Patentinhaber: IBS Filtran Kunststoff-/Metallerzeugnisse GmbH, 51597 Morsbach (DE)
(72) Erfinder: Stausberg, Wolfgang, 51597 Morsbach (DE); Dietmar Sahm, 51580 Reichshof (DE)
(74) Vertreter: Polypatent

(56) Entgegenhaltungen:
- WO-A-01/63100

## Beschreibung

Die Erfindung betrifft eine Filteranordnung zur Filterung von Öl, insbesondere für Motoren und Getriebe, umfassend eine, insbesondere im Wesentlichen aus Kunststoff hergestellte, Ölwanne, und mindestens eine Saugfilteranordnung, die eine Oberschale und eine Unterschale umfasst, wobei in der Unterschale ein Öleinlass und in der Oberschale ein Ölauslass vorgesehen sind. Die Erfindung betrifft ferner eine Ölwanne für Motoren und Getriebe, wobei ein Bereich der Ölwanne als Ölreservoir ausgebildet ist. Die Ölwanne ist im Wesentlichen aus Kunststoff hergestellt.

Ölwannen aus Kunststoff, in denen Saugfilter angeordnet sind, sind grundsätzlich bekannt. Derartige Ölwannen werden häufig im Spritzgießverfahren hergestellt. Ebenso können die Ober- bzw. Unterschalen der Saugfilteranordnung, die zusammen ein Filtergehäuse bilden, aus Kunststoff bestehen und im Spritzgießverfahren hergestellt sein. Ferner ist bekannt, dass bei Saugfilteranordnungen zwischen der Ober- und der Unterschale ein Filtermedium angeordnet ist, durch das das in den Filter eingesaugte Öl hindurch fließen muss und an dem Rückstände im Öl, beispielsweise Metallabrieb oder Ähnliches, zurückgehalten werden. Aus der Druckschrift WO 01/63100 A2 der Anmelderin ist eine Ölwanne für Motoren oder Getriebe mit integriertem Saugölfilter und integriertem Druckölfilter bekannt, wobei Teile der Ölwanne den Boden für Saugfiltergehäuse und Druckfiltergehäuse bilden. Gemäß WO 01/63100 A2 wird das Motor- oder Getriebeöl mittels einer Pumpe zur Ölwanne befördert, in der es nacheinander zunächst durch den Druckfilter und anschließend durch den Saugfilter gereinigt wird, bevor es über den Saugölfilterauslaß wieder aus der Ölwanne austritt. Dabei bilden der Druckölfilterauslaß und der Saugölfiltereinlaß eine funktionelle Einheit, wodurch zum einen das Vermischen des durch den Druckölfilter gereinigten Öls mit dem Öl aus dem Ölsumpf vermieden wird und zum anderen das Verschäumen des Öls unterdrückt wird.

**Aufgabe** der vorliegenden Erfindung ist es, eine Filteranordnung sowie eine Ölwanne der eingangs genannten Art anzugeben, die einfach und kostengünstig herzustellen sind und trotzdem eine optimale Funktionalität gewährleisten.

Diese Aufgabe wird für die Filteranordnung dadurch gelöst, dass die Ölwanne und die Unterschale der mindestens einen Saugfilteranordnung einstückig ausgebildet sind.

Die einstückige Ausbildung von Ölwanne und Unterschale hat den Vorteil, dass zur Herstellung von beiden nur ein Werkzeug verwendet werden muss, wodurch die Kosten sowie der Prozessaufwand reduziert werden. Ferner wird der Zeitaufwand beim Zusammenbau der Filteranordnung reduziert, da die Saugfilteranordnung nicht mehr an der Ölwanne befestigt werden muss. Ein weitere Vorteil ergibt sich dadurch, dass die in der Ölwanne ausgebildete mindestens eine Unterschale derart ausgebildet sein kann, dass für die Ölwanne als Aussteifung dient und somit deren Stabilität verbessert.

Die wenigstens eine Saugfilteranordnung wird wie gewohnt hergestellt, indem auf der in die Ölwanne integrierten Unterschale eine Oberschale angebracht wird. Zwischen Ober- und Unterschale ist ein Filtermedium anzuordnen. Hierfür wird vorzugsweise ein Vlies aus Polyester oder Polyamid oder ein Gewebe aus Metall oder Kunststoff verwendet. Darüber hinaus kann ein plissiertes Filtermedium verwendet werden. Sämtliche Filtermedien werden zweckmäßigerweise zwischen der Ober- und der Unterschale eingeklemmt und mit diesen verschweißt. Ferner kann auch ein Filtermedium, insbesondere ein plissiertes Filtermedium, verwendet werden, das in einem Rahmen angeordnet ist, wobei dann der Rahmen zweckmäßigerweise zwischen Ober- und Unterschale eingeschweißt wird. Zur Verschweißung werden vorzugsweise ein lineares oder orbitales Vibrationsschweißverfahren, ein Laserschweißverfahren, ein Ultraschallschweißverfahren oder ein Heizelementschweißverfahren verwendet. Bei allen Schweißverfahren ist darauf zu achten, dass sich eine umlaufende, luftdichte Verschweißung zwischen Ober- und Unterschale einstellt, damit nur am Öleinlass Öl eintritt und im Bereich der Verschweißung keine Luft oder Ähnliches ins Innere der Saugfilteranordnung eintreten kann, was zu einer Verschäumung des Öls führen könnte und die Funktion des Getriebes bzw. des Motors beeinträchtigen würde.

Die erfindungsgemäße Filteranordnung umfasst eine erste und eine zweite Saugfilteranordnung, wobei die eine Saugfilteranordnung ein Hauptfilter und die andere Saugfilteranordnung ein Vorfilter ist. Hauptfilter und Vorfilter sind im Aufbau grundsätzlich gleich, das heißt, beide bestehen aus einer Ober- und einer Unterschale und einem dazwischen angeordneten Filtermedium. Die Unterschale des Hauptfilters als auch die des Vorfilters werden integriert in der Ölwanne ausgebildet, das heißt, die Ölwanne, die Unterschale des Hauptfilters und die Unterschale des Vorfilters sind einstückig ausgebildet.

Vorfilter, die zusammen mit Hauptfiltern in Filteranordnungen verwendet werden, sind grundsätzlich aus dem Stand der Technik bekannt. Sie umfassen häufig eine eigene Pumpe (auch Getriebepumpe oder Sekundärpumpe genannt), die mit einem eigenen Elektromotor angetrieben wird, sowie Ölzuführung und -abführung. Die erfindungsgemäße Filteranordnung ist also insbesondere für solche Filteranordnungen besonders vorteilhaft, bei denen sowohl ein Hauptfilter als auch ein Vorfilter aus konzeptionellen und/oder konstruktiven Gründen benötigt werden, da zur Ausbildung von beiden Unterschalen und der Ölwanne nur ein Werkzeug benötigt wird, und der Herstellungsprozess somit weiter vereinfacht werden kann. Grundsätzlich ist es auch möglich, eine Ölwanne herzustellen und nur einen Hauptfilter zu verwenden. Das heißt, in einem solchen Fall ist nur auf der einen Unterschale eine Oberschale und ein Filtermedium angeordnet, während die andere keine Verwendung findet. Die andere Unterschale ist dann zweckmäßigerweise so anzuordnen, dass sie die Filtration des Hauptfilters nicht beeinträchtig. Somit ist es möglich, ein Werkzeug, mit dem eine Ölwanne mit zwei daran angebrachten Unterschalen herstellbar sind, sowohl für Filteranordnungen mit nur einem Hauptfilter als auch für Filteranordnungen mit einem Hauptfilter und einem Vorfilter zu verwenden. Dadurch kann dieses Werkzeug für mehrere Produktlinien verwendet werden, wodurch die Herstellungskosten weiter reduziert werden. In der erfindungsgemäßen Filteranordnung können die Oberschalen auf die Unterschalen sowohl jeweils getrennt voneinander als auch in einem Schweißvorgang gemeinsam angeschweißt werden. Ebenso können die Filtermedien sowohl in einem Vorgang eingebracht werden als auch getrennt voneinander.

In einer weiteren bevorzugten Ausführungsform weist die Unterschale der wenigstens einen Saugfilteranordnung einen Boden uns Seitenwände auf. Durch die Seitenwände wird die Unterschale vom Rest der Ölwanne abgegrenzt. Ferner wird der Boden von einem Bereich des Ölwannenbodens gebildet. Die Abmaße der Unterschalen bzw. die Abmaße der Seitenwände und des Bodenbereichs sind auf den jeweils vorliegenden Bedarfsfall abzustimmen. Im Allgemeinen sind die Ausmaße des Vorfilters signifikant kleiner als die des Hauptfilters. Zweckmäßigerweise werden die Seitenwände der Unterschale zumindest bereichsweise von einer vom Ölwannenboden vorstehenden Schalenwand gebildet. Die Schalenwand kann als vom Boden vorstehender Vorsprung ausgebildet sein, der besonders bevorzugt im Wesentlichen senkrecht vom Ölwannenboden vorsteht. Alternativ oder zusätzlich ist es bevorzugt die Seitenwände der Unterschale zumindest bereichsweise als eine im Ölwannenrandbereich ausgebildete Schulter auszubilden. Solche Schultern sind bevorzugt so ausgebildet, dass eine Schulterseite senkrecht vom Boden vorspringt und die andere Schulterseite in etwa parallel zum Ölwannenboden verläuft. Die vorspringende Schulterseite begrenzt dabei die Unterschale, wohingegen die andere Schulterseite ein Auflage für die Oberschale bietet. Die Seitenwände sind zweckmäßigerweise so ausgebildet, dass sie die Ölwanne aussteifen. Die Aussteifwirkung der Seitenwände kann durch Dimensionierung und Ausgestaltung der Seitenwände optimiert werden. Besonders vorteilhaft eigenen sich vom Ölwannenboden vorspringende Schalenwände zur Aussteifung der Ölwanne.

Es ist es zweckmäßig, den Öleinlass einstückig in der Ölwanne auszubilden. Hierdurch wird der Herstellungsaufwand weiter verringert und die Kosten reduziert. Besonders bevorzugt ist es, den Öleinlass in der Schalenwand brückenartig auszubilden. Dafür wird in der Seitenwand ein Durchbruch vorgesehen, der derart ausgestaltet ist, dass am oberen, vom Ölwannenboden entfernt gelegenen Schalenwandrand ein durchgängiger Steg stehenbleibt. Das heißt, der lokal begrenzte Durchbruch wird nur in einem Schalenwandbereich ausgebildet, der ölwannenbodenseitig angeordnet ist, und der Durchbruch verläuft nicht über die gesamte Höhe der Schalenwand, sondern nur über einen Teilbereich. Dies hat den Vorteil, dass das Filtermedium auf den durchgängigen oberen Rand der Schalenwand, auch im Bereich oberhalb des Durchbruchs, umlaufend eine Verklemmung oder Verschweißung erfährt. Hierdurch ist gewährleistet, dass auch bei hohen Unterdrücken das Filtermedium stets in Position und Form gehalten wird und nicht aus der Schweißnaht herausrutschen kann.

Ferner ist es zweckmäßig, im Bereich der Unterschale Rippen und/oder Abstandshalter zur Positionierung eines Filtermediums und/oder zur Steuerung des Ölflusses einstückig in der Ölwanne auszubilden. Diese an sich bekannten Elemente werden normalerweise in die separate Unterschale eines Filtergehäuses einer Saugfilteranordnung integriert. Zur weiteren Vereinfachung der Herstellungsvorgänge bzw. zur Reduzierung der Kosten ist es vorteilhaft, dass diese Elemente ebenfalls einstückig in der Ölwanne ausgebildet sind, da dadurch ein weiterer Arbeitsschritt eingespart werden kann.

In der erfindungsgemäßen Filteranordnung ist in der Ölwanne wenigstens ein Leitungssegment vorgesehen, dass mittels eines komplementären Gegenstücks zu einer geschlossenen Ölleitung vervollständigt werden kann. Die geschlossenen Ölleitung kann also mittels dieses Leitungssegments und eines darauf angebrachten komplementären Gegenstücks hergestellt werden. Dies hat den Vorteil, dass, wenn für eine Filteranordnung Ölleitungen benötigt werden, hiervon zumindest ein Teil bereits in der Ölwanne ausgebildet sein kann und nur noch ein Gegenstück zur Vervollständigung der Ölleitung benötigt wird. Die Größe bzw. die Abmaße und die Positionierung des Leitungssegments ist an den jeweiligen Verwendungszweck anzupassen. Besonders vorteilhaft ist das Leitungssegment als Teil einer Druckleitung verwendbar, durch die das von einer Pumpe aus der mindestens einen Saugfilteranordnung abgesaugte Öl abgeführt werden kann. Besonders vorteilhaft ist eine solche Druckleitung für die Pumpe eines Vorfilters verwendbar. Zweckmäßigerweise ist die Druckleitung so auszubilden, dass sie einem Druck von wenigstens 40 bar standhält. Hierfür müssen also das Leitungssegment, das Gegenstück und auch die Verbindung zwischen beiden entsprechend ausgelegt werden. Das Leitungssegment und die Ölwanne sind zweckmäßigerweise einstückig ausgebildet.

Bevorzugterweise ist das Leitungssegment als kanalartige Rinne ausgebildet, die mittels einer als komplementäres Gegenstück ausgebildeten Abdeckung zu einer geschlossenen Ölleitung vervollständigt werden kann. Hierdurch ist die Ölleitung besonders einfach herstellbar.

Um eine sichere und dauerhafte Verbindung zwischen Leitungssegment und Gegenstück zu gewährleisten und somit Leckagen oder Ähnliches zu verhindern, ist es zweckmäßig, das Gegenstück ölwannenseitig anzuschweißen. Die Verschweißung wird zweckmäßigerweise so ausgeführt, dass keine Luft oder Ähnliches in die Ölleitung eindringen kann. Zur Verschweißung des Gegenstücks mit der Ölwanne werden bevorzugterweise die im Zusammenhang mit der Verschweißung der Obermit der Unterschale bzw. mit dem Filtermedium genannten Verfahren verwendet.

Grundsätzlich kann das Gegenstück als separates Bauteil ausgebildet werden. Bevorzugt wird das Gegenstück aber durch die Oberschale gebildet. Besonders bevorzugt bildet die Oberschale eine Abdeckung für eine Kanalrinne. Im Falle von zwei Filteranordnungen bildet vorteilhafterweise die Oberschale des Vorfilters das Gegenstück. Hierdurch ist es möglich, ein weiteres Bauteil in ein anderes zu integrieren und somit Komponenten- und Materialeinsparungen zu erreichen. Die Oberschale ist so auszulegen, dass sie sowohl die Unterschale als auch das Leitungssegment vollständig abdeckt. Beim Anbringen der Oberschale auf der Ölwanne wird diese zweckmäßigerweise mittels einer umlaufenden Dichtverschweißung derart auf der Ölwanne angebracht, dass sich eine Hohlkammer zwischen Ober- und Unterschale bildet und gleichzeitig eine geschlossene Ölleitung zwischen Oberschale und Leitungssegment ausgebildet wird. Ist die mindestens eine Saugfilteranordnung als Vorfilter ausgebildet, ist diese vorteilhafterweise so auszulegen, dass sie Unterdrücken bis zu 1 bar konstruktiv Stand hält.

Bevorzugt sind der Ein- und Auslass für die Ölleitung in dem Gegenstück vorgesehen. Besonders bevorzugt sind Gegenstück, Einlass und Auslass einstückig ausgebildet. Hierdurch ist es im Sinne des Integrationsgedankens der vorliegenden Erfindung möglich, weitere Komponenten einzusparen und somit die Herstellungsvorgänge zu vereinfachen. Die Positionen und Formen des Ölleitungseinlasses bzw. -auslasses, die beispielsweise als Stutzen ausgebildet sein können, werden seitens der Getriebe bzw. Motorgeometrie vorgegeben und sind entsprechend anzupassen und zu gestalten. Dies gilt grundsätzlich auch für den Öleinlass bzw. -auslass der mindestens einen Saugfilteranordnung. Häufig ist es zweckmäßig, an den Ölleitungseinlass sowie an den Ölleitungsauslass Dichtelemente, beispielsweise O-Ringe, Flachdichtungen oder Mehrfachdichtringe, vorzusehen, so dass Ölleckagen oder Ähnliches verhindert werden.

In einer weiter bevorzugten Ausführungsform weist das als Kanalrinne ausgebildete Leitungssegment zwei Rinnenwände auf, die vom Boden der Ölwanne vorstehen. Besonders bevorzugt verlaufen die beiden Rinnenwände im Wesentlichen parallel zueinander. Hierdurch kann die Kanalrinne auf einfache Weise ausgebildet werden. Durch die Parallelität der Rinnenwände wird sichergestellt, dass die Kanalrinne bzw. die daraus entstehende Ölleitung einen konstanten Durchmesser aufweist, wodurch sich konstante Druckverhältnisse bzw. Fließgeschwindigkeiten in der Ölleitung einstellen.

Alternativ und zusätzlich kann die Kanalrinne eine Vertiefung im Boden der Ölwanne aufweisen. Diese Vertiefung ist zweckmäßigerweise konstant über die ganze Länge der Kanalrinne ausgebildet.

Ferner kann zur Bildung der Ölleitung eine konvexe Wölbung im Gegenstück vorgesehen sein. Durch die konvexe Wölbung wird ein Hohlraum geschaffen bzw. ein schon vorhandener Hohlraum vergrößert, der dann nach Anschweißung bzw. Anbringung des Gegenstücks auf der Ölwanne die Ölleitung bildet. Auch hierbei ist es zweckmäßig, dass sich die Wölbung über die gesamte Länge der Ölleitung hin erstreckt.

In einer weiteren bevorzugten Ausführungsform ist das Leitungssegment im Wesentlichen an einer Seitenwand der Unterschale angeordnet. Das bedeutet, das Leitungssegment verläuft im Wesentlichen entlang einer Seitenwand der Unterschale und im Wesentlichen direkt an dieser. Hierbei ist vorteilhaft, dass, beispielsweise bei dem als Kanalrinne ausgebildetem Leitungssegment, die Seitenwand der Unterschale somit die zusätzliche Funktion einer Rinnenwand erfüllen kann. Dabei ist es zweckmäßig, die zweite Rinnenwand im Wesentlichen parallel zur Seitenwand der Unterschale auszubilden, so dass sich eine gleichmäßig ausgeformte Kanalrinne ergibt. Hierdurch kann die Ausbildung einer Wand eingespart und somit die Herstellung weiter optimiert werden.

In der erfindungsgemäßen Filteranordnung können die Oberschale des Hauptfilters und die Oberschale des Vorfilters grundsätzlich zwei separate Bauteile sein. In einer bevorzugten Ausführungsform sind diese hingegen einstückig ausgebildet. Da der Vorfilter normalerweise um einiges kleiner ist als der Hauptfilter und eine andere Form aufweist, müssen zur Herstellung von zwei separaten Oberschalen auch zwei separate Werkzeuge verwendet werden. Durch die Ausbildung nur einer Oberschale kann somit ein Werkzeug eingespart werden.

Verwendet die Filteranordnung einen Vorfilter mit einer dazugehörigen Pumpe zum Ansaugen von Öl aus dem Vorfilter, ist es bevorzugt, dass an der Ölwanne oder am Vorfilter selbst Anschluss- und Positionierelemente zur formschlüssigen Aufnahme der Pumpe vorhanden sind. Besonders bevorzugt umfassen diese Anschluss- und Positionierelemente den Vorfilterölauslass sowie einen Ölleitungs- bzw. Druckleitungseinlass, der am Deckel bzw. an der Oberschale des Vorfilters angeordnet ist. Hierdurch kann eine sichere Befestigung und Positionierung der Pumpe im Bereich der Filteranordnung gewährleistet werden. Zweckmäßigerweise sind die Anschluss- und Positionierelemente einstückig mit der Ölwanne bzw. mit der Oberschale des Vorfilters ausgebildet, um den Herstellungsaufwand weiter zu reduzieren. Durch die formschlüssige Aufnahme der Pumpe wird eine sichere Befestigung über die gesamte Benutzungsdauer der Filteranordnung hinweg gewährleistet. Gleichzeitig wird die Montage aufgrund der durch die Elemente vorgegebenen Positionierung erleichtert. Durch die Ausbildung der Ölwanne bzw. des Vorfilters aus Kunststoff und der dadurch gegebenen gestalterischen und formtechnische Möglichkeiten bezüglich der Ausformung von Anschluss- und Positionierelementen, ist die Pumpe des Vorfilters besonders vorteilhaft und einfach an der Ölwanne bzw. am Vorfilter anbringbar und in die Filteranordnung integrierbar.

Zweckmäßigerweise ist ferner bei dieser Ausführungsform eine abdichtbare Durchbrechung in der Ölwanne vorgesehen, durch die eine elektrische Zuleitung für die Pumpe des Vorfilters geführt werden kann. Die elektrische Zuleitung umfasst die Stromversorgung der Pumpe sowie die notwendigen Leitungen für die Ansteuerung derselben. Die Abdichtung der Durchbrechung in der Ölwanne kann beispielsweise mittels einer Dichtung, beispielsweise in der Art einer Gummitülle, erreicht werden. Zweckmäßigerweise ist diese Dichtung so auszulegen, dass sie Überdrücken von mindestens 0,5 bar Stand hält. Alternativ ist es möglich, die Ölablassschraube der Ölwanne so auszubilden, dass sie zumindest als Teil einer elektrischen Zuleitung verwendbar ist. Hierfür werden an der Ölablassschraube zweckmäßigerweise Steckerkontakte und leitende Metallstifte vorgesehen, so dass die Ölablassschraube an der Innenseite mit der Pumpe und an der Außenseite mit der Ansteuerung bzw. der elektrischen Versorgungsquelle mittels Steckverbindungen verbunden werden kann. Vorteilhaft ist hierbei, dass keine Durchbrechung in der Ölwanne nötig ist und somit das Risiko einer Leckage reduziert wird.

Die vorliegende Erfindung wird weiterhin durch eine Ölwanne der eingangs genannten Art gelöst, bei der mindestens ein schalenartiger, abgegrenzter Bereich, der mittels eines Öleinlasses mit dem Ölreservoir verbunden ist, vorgesehen ist, wobei der schalenartige, abgegrenzte Bereich mittels einer Abdeckung zu einem Filtergehäuse einer Saugfilteranordnung vervollständigt werden kann. Bevorzugterweise sind bei dieser Ölwanne ein erster und ein zweiter schalenartiger Bereich vorgesehen, wobei einer zu einem Filtergehäuse eines Hauptfilters und der andere zu einem Filtergehäuse eines Vorfilters vervollständigt werden kann. Die Abdeckung zur Vervollständigung des Filtergehäuses wird zweckmäßigerweise durch eine Oberschale einer Saugfilteranordnung gebildet, die auf den mindestens einen schälenartigen, abgegrenzten Bereich aufgesetzt und dort, insbesondere mittels Verschweißung, angebracht wird. Zweckmäßigerweise ist die Ölwanne einstückig ausgebildet.

Nachfolgend wird die Erfindung anhand eines in der Zeichnung dargestellten Ausführungsbeispiels weiter beschrieben. Es zeigen schematisch:
- Fig. 1:: eine perspektivische Explosionsansicht einer Filteranordnung mit einer Ölwanne, einem Hauptfilter und einem Vorfilter;
- Fig. 2:: eine Draufsicht der Vorrichtung aus Fig. 1;
- Fig. 3:: eine Querschnittsansicht entlang des Schnitts A-A aus Fig. 2;
- Fig. 4a:: eine Querschnittsansicht entlang des Schnitts B-B aus Fig. 2; und
- Fig. 4b:: eine Querschnittsansicht des Teilausschnitts X aus Fig. 4a.

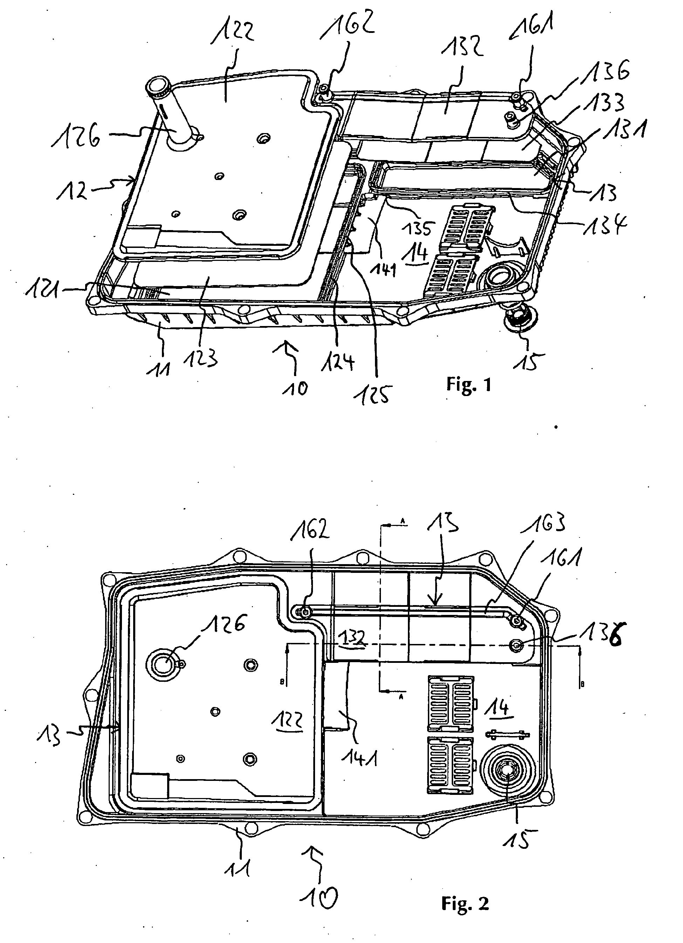

Fig. 1 zeigt eine perspektivische Explosionsansicht einer Filteranordnung 10, die eine ölwanne 11, einen Hauptfilter 12 sowie einen Vorfilter 13 umfasst. Die Ölwanne 11 ist aus Kunststoff und im Spritzgießverfahren hergestellt. Innerhalb der Ölwanne 11 ist ein Bereich 14 vorgesehen, der als Ölreservoir dient. Hierin kann das Öl des Motors bzw. des Getriebes gesammelt und in den Hauptfilter 12 bzw. in den Vorfilter 13 eingeleitet werden. Weiterhin ist im Bereich des Ölreservoirs 14 eine Ölablassschraube 15 vorgesehen. Der Hauptfilter 12 sowie der Vorfilter 13 grenzen an das Ölreservoir 14 an.

Sowohl der Hauptfilter 12 als auch der Vorfilter 13 bestehen jeweils aus einer Unterschale 121, 131 und einer Oberschale 122, 132. Zwischen der Oberschale 122, 132 und der Unterschale 121, 131 ist jeweils ein Filtermedium 123, 133 angeordnet. Die Ränder der Ober- und Unterschalen sind so ausgebildet, dass sie jeweils dicht aufeinander aufliegen. Die Filtermedien werden zwischen den Rändern der Ober- und Unterschale eingeklemmt. Nach Einbringung des Filtermediums bzw. der Oberschale werden Ober- und Unterschale miteinander verschweißt. Sowohl die Unterschale 121 des Hauptfilters 12 als auch die Unterschale 131 des Vorfilters 13 sind einstückig in der Ölwanne 11 ausgebildet. Das heißt, dass zur Vervollständigung der Filtergehäuse nur die Ölwanne 11 und die Oberschale 122 des Hauptfilters 12 sowie die Oberschale 133 des Vorfilters 13 benötigt werden. Beide Oberschalen 122, 132 sind jeweils aus Kunststoff und im Spritzgießverfahren hergestellt.

Die Unterschalen 121, 131 werden bereichsweise durch Schalenwände 124, 134 abgegrenzt, die vom Ölwannenboden vorstehen. In anderen Bereichen werden die Unterschalen 121, 131 durch die Außenwände der Ölwanne 11 abgegrenzt. Der Boden der Unterschalen 121, 131 wird durch den Ölwannenboden gebildet. In den Schalenwänden 124, 134 sind jeweils eine oder mehrere Durchbrechungen vorgesehen, die in jeder Unterschale einen brückenartigen Öleinlass 125, 135 bilden. Die brückenartige Ausbildung der Öleinlässe 125, 135 ermöglicht, dass im gesamten Bereich der Einlässe ein im oberen Randbereich der Schalenwände 124, 134 angeordneter, durchgehender Steg verbleibt, an dem die Filtermedien 123, 133 angeschweißt werden können, so dass sich eine stabile Lagerung der Filtermedien 123, 133 ergibt.

Durch die Öleinlässe 125, 135 kann Öl aus dem Ölreservoir 14 in den Hauptfilter 12 sowie in den Vorfilter 13 gelangen. Das Öl wird in die Filter 12, 13 durch dort vorherrschende Unterdrücke eingesogen, die durch Pumpen (hier nicht dargestellt) erzeugt werden. Das zu filtrierende Öl aus dem Ölreservoir 14 wird sowohl vom Hauptfilter 12 als auch vom Vorfilter 13 aus dem im Wesentlichen selben lokalen Bereich des Ölreservoirs 14 angesaugt. Dieses wird dadurch erreicht, dass sowohl der Öleinlass 125 des Hauptfilters 12 als auch der Öleinlass 135 des Vorfilters 13 angrenzend an denselben Ölauslassbereich 141 des Ölreservoirs 14 angeordnet sind. Diese Ölauslassbereich 141 ist derart ausgebildet, dass in diesem Bereich, auch bei Bewegungen des Fahrzeugs, beispielsweise eines Automobils, oder sonstigen dynamischen Belastungen oder Einwirkungen auf die Filteranordnung, jederzeit sichergestellt ist, dass ausreichend Öl für die Ansaugung zur Verfügung steht.

Sowohl in der Oberschale 122 des Hauptfilters 12 als auch in der Oberschale 132 des Vorfilters 13 ist jeweils ein Ölauslass 126, 136 vorgesehen. An die Ölauslässe 126, 136 ist jeweils eine Saugpumpe (hier nicht dargestellt) anzuschließen, durch die ein Unterdruck in die jeweilige Filteranordnung eingebracht werden kann. Durch die in den Filteranordnungen vorherrschenden Unterdrücke, wird Öl vom Ölreservoir 14 durch die Öleinlässe 125, 135 in die Unterschalen 121, 131 gesaugt. Dieses Öl tritt dann durch die Filtermedien 123, 133 hindurch, wobei Verunreinigungen, Abrieb, etc. im Öl von den Filtermedien 123, 133 zurückgehalten werden. Danach kann das gefilterte Öl durch die Ölauslässe 126 ,136 aus den Filteranordnungen abgepumpt werden. Die Ölauslässe 126, 136 sind als Stutzen ausgebildet, die von den Oberschalen 122, 132 nach oben vorstehen.

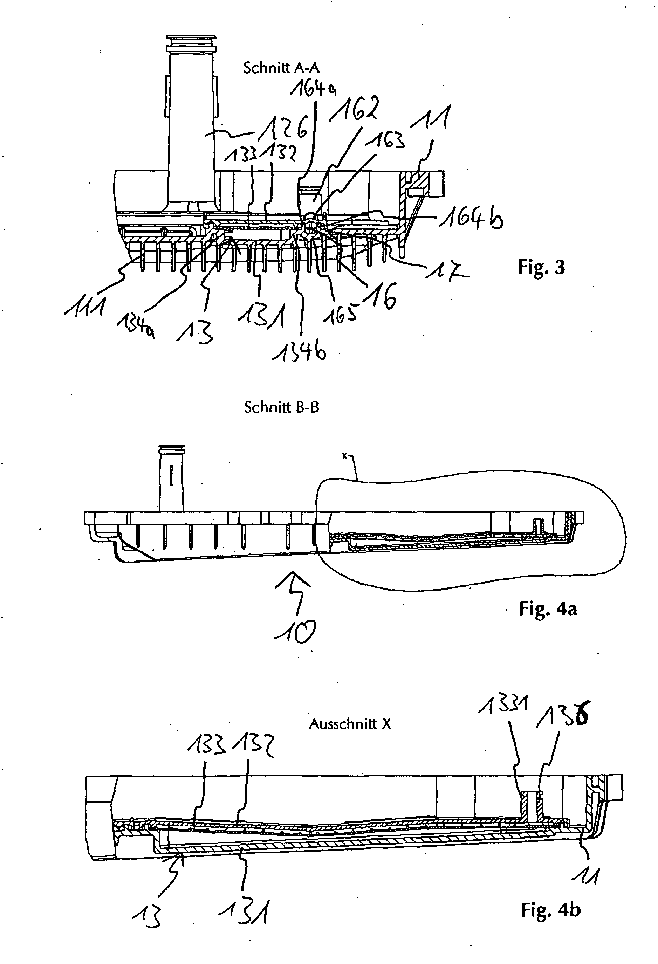

In der deckelförmigen Oberschale 132 des Vorfilters 13 sind weiterhin ein Ölleitungseinlass 161 sowie ein Ölleitungsauslass 162 vorgesehen. Im vorliegenden Beispiel ist die Ölleitung 16 (s. Fig. 2 und 3) als Druckleitung ausgebildet. Das von der Vorfilterpumpe (hier nicht dargestellt) durch den Ölauslass 136 abgepumpte Öl wird von der Pumpe umgelenkt und auf der Druckseite der Pumpe in den Druckkanaleinlass 161 eingeleitet. Vom Druckkanaleinlass 161 fließt das Öl nun durch den Druckkanal 16 bis hin zum Druckkanalauslass 162. Sowohl Druckkanaleinlass 161 als auch Druckkanalauslass 162 sind als von der Vorfilteroberschale 132 vorspringende Stutzen ausgebildet. Im vorliegenden Ausführungsbeispiel werden der Druckkanaleinlass 161 und der Ölauslass 136 als Befestigungs- und Positionierelemente für die Vorfilterpumpe verwendet.

Im vorliegenden Ausführungsbeispiel ist der Hauptfilter 12 so bemessen, dass er in etwa die Hälfte der Innenfläche der Ölwanne 11 in Anspruch nimmt. Wie in Fig. 1 dargestellt ist, nimmt er in etwa die gesamte linke Hälfte der Ölwanne 11 ein und weist eine annäherungsweise quadratische Grundform auf, mit einer Aussparung in der rechten oberen Ecke. Der Vorfilter 13 ist dagegen länglich ausgebildet und erstreckt sich vom oberen rechten Randbereich der Ölwanne 11 in etwa parallel zur oberen Kante der Ölwanne 11 bis ungefähr zur Mitte der Ölwanne 11. Die Grundform des Vorfilters 13 ist annäherungsweise rechteckig, mit einem lokal vorstehen Bereich in der linken oberen Ecke.

In Fig. 2 ist eine Draufsicht der Filteranordnung 10 aus Fig. 1 dargestellt. Im Bereich der Druckleitung 16 ist in der Oberschale 132 des Vorfilters eine konvexe, also nach außen gerichtete, Wölbung 163 ausgebildet. Diese Wölbung 163 erstreckt sich über die gesamte Länge der Druckleitung 16. Die Breite der Wölbung 163 entspricht in etwa der Breite der Druckleitung 16. Die Druckleitung 16 weist über ihre gesamte Länge einen im Wesentlichen konstanten Querschnitt auf.

Fig. 3 ist eine Querschnittsansicht der Filteranordnung 10 aus Fig. 2 entlang des Schnitts A-A. Der Schnitt A-A verläuft durch den Vorfilter 13 und die Druckleitung 16. Die Unterschale 131 des Vorfilters 13 weist eine linke sowie eine rechte Schalenwand 134a, 134b auf. Auf diesen Schalenwänden 134a, 134b liegt die Oberschale 132 auf. Zwischen Oberschale 132 und Schalenwänden 134a, 134b ist das Filtermedium 133 eingeklemmt und mit Ober- sowie Unterschale verschweißt.

Die Druckleitung 16 weist eine linke Rinnenwand 164a sowie eine rechte Rinnenwand 164b auf, die vom Ölwannenboden vorstehen und im Wesentlichen senkrecht auf diesen stehen. Zusammen mit einer dazwischenliegenden und im Boden der Ölwanne 11 ausgebildeten Vertiefung 165, bilden sie eine Kanalrinne 17. Die Rinnenwände 164a, 164b der Kanalrinne 17 verlaufen im Wesentlichen parallel zu den Schalenwänden 134a, 134b der Unterschale 131. Die Oberschale 132 weist im Bereich des Druckkanals 16 eine konvexe Wölbung 163 auf, die sich in der Breite von der Rinnenwand 164a bis zur Rinnenwand 164 b erstreckt. Die Oberschale 132 liegt auf beiden Rinnenwänden 164a, 164b auf. Im Kontaktbereich sind beide miteinander verschweißt. Der Druckkanal 16 ist direkt neben und parallel zum Vorfilter 13 verlaufend angeordnet, so dass die Oberschale 132, die sowohl als Abdeckung der Unterschale 131 als auch als Abdeckung der von den Seitenwänden 164a, 164b und der Vertiefung 165 gebildeten Kanalrinne 17 fungiert, kompakt ausgebildet werden kann. An der Unterseite der Ölwanne 11 sind Längsrippen 111 angeordnet, die der Versteifung der Ölwanne 11 dienen.

Fig. 4a ist eine Querschnittsansicht der Filteranordnung 10 aus Fig. 2 entlang des Schnitts B-B. In Fig. 4a ist ein Ausschnitt X markiert, der in Fig. 4b vergrößert dargestellt ist. Das Filtermedium 133 verläuft im Wesentlichen parallel zur Oberschale 132. Am oberen Rand des Ölauslasses 136 ist eine umlaufende Nut 1331 vorgesehen, die zur besseren Befestigung der Pumpe des Vorfilters am Ölauslass 136 dient. Insgesamt ist die Höhe des Vorfilters 13, inklusive des vorspringenden Ölauslassstutzens 136, geringer als die der Ölwanne 11, so dass beispielsweise genug Platz zur Anbringung und Integration einer Vorfilterpumpe in die Ölwanne 11 verbleibt.

## Patentansprüche

1. Filteranordnung zur Filterung von Öl, insbesondere für Motoren und Getriebe, umfassend eine, insbesondere im Wesentlichen aus Kunststoff hergestellte, Ölwanne (11), und mindestens eine Saugfilteranordnung (12, 13), die eine Oberschale (122, 132) und eine Unterschale (121, 131) umfasst, wobei in der Unterschale (121, 131) ein Öleinlass (125, 135) und in der Oberschale ein Ölauslass (126, 136) vorgesehen sind, wobei die Ölwanne (11) und die Unterschale (121, 131) einstückig ausgebildet sind,
**dadurch gekennzeichnet,**
**dass** die Filteranordnung (10) eine erste und eine zweite Saugfilteranordnung (12, 13) umfasst, wobei die eine ein Hauptfilter (12) und die andere ein Vorfilter (13) ist, und dass in der Ölwanne (11) wenigstens ein Leitungssegment (17) ausgebildet ist, das mittels eines komplementären Gegenstücks zu einer geschlossenen Ölleitung (16) vervollständigt werden kann, wodurch eine in die Ölwanne integrierbare Vorfilterpumpe an die Ölleitung (16) anschließbar ist.

2. Filteranordnung nach Anspruch 1,
**dadurch gekennzeichnet,**
**dass** die Unterschale (121, 131) einen Boden und die Schale abgrenzende Seitenwände aufweist, wobei der Boden von einem Bereich des Bodens der Ölwanne (11) gebildet ist.

3. Filteranordnung nach Anspruch 2,
**dadurch gekennzeichnet,**
**dass** die Seitenwände der Unterschale (121, 131) zumindest bereichsweise von einer vom Ölwannenboden vorstehenden Schalenwand (124, 134) gebildet werden.

4. Filteranordnung nach Anspruch 2 oder 3,
**dadurch gekennzeichnet,**
**dass** die Seitenwände der Unterschale zumindest bereichsweise von einer im Ölwannenrandbereich ausgebildeten Schulter gebildet werden.

5. Filteranordnung nach einem der vorhergehenden Ansprüche,
**dadurch gekennzeichnet,**
**dass** der Öleinlass (125, 135) einstückig in der Ölwanne (11) ausgebildet ist.

6. Filteranordnung nach einem der vorhergehenden Ansprüche,
**dadurch gekennzeichnet,**
**dass** die Unterschale (121, 131) zumindest bereichsweise durch eine vom Ölwannenboden vorstehende Schalenwand (124, 134) vom Rest der Ölwanne (11) abgegrenzt ist, und
**dass** der Öleinlass (125, 135) als Brücke in der Schalenwand (124, 134) ausgebildet ist.

7. Filteranordnung nach einem der vorhergehenden Ansprüche,
**dadurch gekennzeichnet,**
**dass** im Bereich der Unterschale (121, 131) Rippen und/oder Abstandshalter zur Positionierung eines Filtermediums (123, 133) und/oder zur Steuerung des Ölflusses einstückig in der Ölwanne (11) ausgebildet sind.

8. Filteranordnung nach einem der vorhergehenden Ansprüche, mit einer Pumpe zum Ansaugen von Öl aus der mindestens einen Saugfilteranordnung (12, 13),
**dadurch gekennzeichnet,**
**dass** das Leitungssegment (17) einen Teil einer Druckleitung (16) bildet, durch die das von der Pumpe angesaugte Öl abgeführt wird.

9. Filteranordnung nach einem der vorhergehenden Ansprüche,
**dadurch gekennzeichnet,**
**dass** das Gegenstück ölwannenseitig angeschweißt ist.

10. Filteranordnung nach einem der vorhergehenden Ansprüche,
**dadurch gekennzeichnet,**
**dass** das Gegenstück durch die Oberschale (132) gebildet wird.

11. Filteranordnung nach einem der vorhergehenden Ansprüche,
**dadurch gekennzeichnet,**
**dass** an dem Gegenstück ein Einlass (161) und ein Auslass (162) für die Ölleitung vorgesehen sind.

12. Filteranordnung nach einem der vorhergehenden Ansprüche,
**dadurch gekennzeichnet,**
**dass** das Leitungssegment (17) im Wesentlichen an einer Schalenwand (134b) der Unterschale (131) angeordnet ist.

13. Filteranordnung nach einem der vorhergehenden Ansprüche,
**dadurch gekennzeichnet,**
**dass** das Gegenstück bezüglich des Leitungssegments (17) konvex gewölbt ist.

14. Filteranordnung nach einem der vorhergehenden Ansprüche,
**dadurch gekennzeichnet,**
**dass** das Leitungssegment (17) als Kanalrinne und das Gegenstück als Abdeckung für die Kanalrinne ausgebildet sind.

15. Filteranordnung nach Anspruch 14,
**dadurch gekennzeichnet,**
**dass** die Kanalrinne (17) zwei, im Wesentlichen parallel zueinander verlaufende Rinnenwände (164a, 1646), die vom Boden der Ölwanne (11) vorstehen, umfasst.

16. Filteranordnung nach Anspruch 14 oder 15,
**dadurch gekennzeichnet,**
**dass** die Kanalrinne (17) eine Vertiefung (165) im Boden der Ölwanne (11) umfasst.

17. Filteranordnung nach einem der vorhergehenden Ansprüche,
**dadurch gekennzeichnet,**
**dass** die Ölleitung (16) derart ausgebildet ist, dass sie einem Druck von wenigstens 40 bar standhält.

18. Filteranordnung nach einem der vorhergehenden Ansprüche,
**dadurch gekennzeichnet,**
**dass** die Oberschale (122) des Hauptfilters (12) und die Oberschale (132) des Vorfilters (13) einstückig ausgebildet sind.

19. Filteranordnung nach einem der vorhergehenden Ansprüche, mit einer Pumpe zum Ansaugen von Öl aus dem Vorfilter (13),
**dadurch gekennzeichnet,**
**dass** an der Ölwanne (11) oder am Vorfilter (13) Anschluss- und Positionierelemente (136, 161) zur formschlüssigen Aufnahme der Pumpe vorhanden sind.

20. Filteranordnung nach Anspruch 19,
**dadurch gekennzeichnet,**
**dass** eine abdichtbare Durchbrechung in der Ölwanne (11) vorgesehen ist, durch die eine elektrische Zuleitung für die Pumpe geführt ist.

21. Filteranordnung nach Anspruch 19, mit einer Ölablassschraube (15) in der Ölwanne (11),
**dadurch gekennzeichnet,**
**dass** die Ölablassschraube (15) derart ausgebildet ist, dass sie zumindest als Teil einer elektrischen Zuleitung für die Pumpe verwendbar ist.

## Claims

1. A filter arrangement for filtering oil, particularly for engines and gears, comprising an oil pan (11), which is particularly substantially made from plastic material, and at least one suction filter arrangement (12, 13) which comprises an upper shell (122, 132) and a lower shell (121, 131), wherein an oil inlet (125, 135) is provided in the lower shell (121, 131) and an oil outlet (126, 136) is provided in the upper shell, wherein the oil pan (11) and the lower shell (121, 131) are constructed in one piece,
**characterised in that**
the filter arrangement (10) comprises a first and a second suction filter arrangement (12, 13), wherein one is a main filter (12) and the other is a preliminary filter (13), and **in that** at least one line element (17) is constructed in the oil pan (11), which line element can be completed by means of a complementary counter-piece to form a closed oil line (16), thus enabling a preliminary filter pump which may be integrated in the oil pan to be attached to the oil line (16).

2. A filter arrangement according to Claim 1,
**characterised in that**
the lower shell (121, 131) has a base and side walls delimiting the shell, wherein the base is formed by a region of the base of the oil pan (11).

3. A filter arrangement according to Claim 2,
**characterised in that**
the side walls of the lower shell (121, 131) are formed at least in parts by a shell wall (124, 134) which projects from the oil pan base.

4. A filter arrangement according to Claim 2 or 3,
**characterised in that**
the side walls of the lower shell are formed at least in parts by a shoulder constructed in the oil pan edge region.

5. A filter arrangement according to one of the preceding claims,
**characterised in that**
the oil inlet (125, 135) is constructed in one piece in the oil pan (11).

6. A filter arrangement according to one of the preceding claims,
**characterised in that**
the lower shell (121, 131) is delimited from the remainder of the oil pan (11) at least in parts by a shell wall (124, 134) projecting from the oil pan base, and **in that** the oil inlet (125, 135) is constructed as a bridge in the shell wall (124, 134).

7. A filter arrangement according to one of the preceding claims,
**characterised in that**,
in the region of the lower shell (121, 131), ribs and/or spacers for positioning a filter medium (123, 133) and/or for controlling the oil flow are constructed in one piece in the oil pan (11).

8. A filter arrangement according to one of the preceding claims, having a pump for drawing oil from the at least one suction filter arrangement (12, 13),
**characterised in that**
the line element (17) forms part of a pressure line (16) through which the oil drawn by the pump is carried away.

9. A filter arrangement according to one of the preceding claims,
**characterised in that** the counter-piece is welded on on the oil-pan side.

10. A filter arrangement according to one of the preceding claims,
**characterised in that**
the counter-piece is formed by the upper shell (132).

11. A filter arrangement according to one of the preceding claims,
**characterised in that**
an inlet (161) and an outlet (162) for the oil line are provided on the counter-piece.

12. A filter arrangement according to one of the preceding claims,
**characterised in that**
the line segment (17) is arranged substantially on a shell wall (134b) of the lower shell (131).

13. A filter arrangement according to one of the preceding claims,
**characterised in that**
the counter-piece is convexly curved in relation to the line segment (17).

14. A filter arrangement according to one of the preceding claims,
**characterised in that**
the line segment (17) is constructed as a channel-like groove and the counter-piece is constructed as a cover for the channel-like groove.

15. A filter arrangement according to Claim 14,
**characterised in that**
the channel-like groove (17) comprises two substantially mutually parallel-extending groove walls (164a, 164b) which project from the base of the oil pan (11).

16. A filter arrangement according to Claim 14 or 15,
**characterised in that**
the channel-like groove (17) comprises a depression (165) in the base of the oil pan (11).

17. A filter arrangement according to one of the preceding claims,
**characterised in that** the oil line (16) is constructed in such a way that it withstands a pressure of at least 40 bar.

18. A filter arrangement according to one of the preceding claims,
**characterised in that**
the upper shell (122) of the main filter (12) and the upper shell (132) of the preliminary filter (13) are constructed in one piece.

19. A filter arrangement according to one of the preceding claims, having a pump for drawing oil from the preliminary filter (13),
**characterised in that**
attachment and positioning elements (136, 161) for form-fittingly receiving the pump are provided on the oil pan (11) or on the preliminary filter (13).

20. A filter arrangement according to Claim 19,
**characterised in that**
a sealable opening is provided in the oil pan (11), through which an electrical supply line for the pump is guided.

21. A filter arrangement according to Claim 19, having an oil discharge screw (15) in the oil pan (11), **characterised in that** the oil discharge screw (15) is constructed in such a way that it may be used at least as part of an electrical supply line for the pump.

## Revendications

1. Système de filtre pour filtrer de l'huile, en particulier pour moteurs et engrenages, comportant une cuve à huile (11), réalisée en particulier pour l'essentiel en matière plastique, et au moins un système de filtre d'aspiration (12, 13), qui comporte une coque supérieure (122, 132) et une coque inférieure (121, 131), une admission d'huile (125, 135) étant prévue dans la coque inférieure (121, 131) et une sortie d'huile (126, 136) étant prévue dans la coque supérieure, ladite cuve à huile (11) et ladite coque inférieure (121, 131) étant réalisées d'un seul tenant,
**caractérisé**
**en ce que** le système de filtre (10) comporte un premier et un deuxième système de filtre d'aspiration (12, 13), l'un étant un filtre principal (12) et l'autre un filtre préliminaire (13), et
**en ce que** dans la cuve à huile (11) est réalisé au moins un segment de conduite (17) qui, au moyen d'une pièce complémentaire, peut être complété pour former une conduite d'huile (16) fermée, moyennant quoi une pompe du filtre préliminaire, propre à être intégrée dans la cuve à huile, peut être raccordée à la conduite d'huile (16).

2. Système de filtre selon la revendication 1, **caractérisé en ce que** la coque inférieure (121, 131) comporte un fond et des parois latérales délimitant la coque, ledit fond étant formé par une zone du fond de la cuve à huile (11).

3. Système de filtre selon la revendication 2, **caractérisé en ce que** les parois latérales de la coque inférieure (121, 131) sont formées au moins par zones par une paroi en coque (124, 134) s'avançant en saillie sur le fond de la cuve à huile.

4. Système de filtre selon la revendication 2 ou 3, **caractérisé en ce que** les parois latérales de la coque inférieure sont formées au moins par zones par un épaulement formé dans la zone du bord de la cuve à huile.

5. Système de filtre selon l'une quelconque des revendications précédentes, **caractérisé en ce que** l'admission d'huile (125, 135) est réalisée d'un seul tenant avec la cuve à huile (11).

6. Système de filtre selon l'une quelconque des revendications précédentes, **caractérisé en ce que** la coque inférieure (121, 131) est délimitée, au moins par zones, du reste de la cuve à huile (11) par une paroi en coque (124, 134) s'avançant en saillie sur le fond de la cuve à huile, et **en ce que** l'admission d'huile (125, 135) est réalisée sous forme de pont dans la paroi en coque (124, 134).

7. Système de filtre selon l'une quelconque des revendications précédentes, **caractérisé en ce que** dans la zone de la coque inférieure (121, 131), des nervures et/ou écarteurs pour le positionnement d'un moyen de filtrage (123, 133) et/ou pour la commande du flux d'huile sont réalisées d'un seul tenant dans la cuve à huile (11).

8. Système de filtre selon l'une quelconque des revendications précédentes, comportant une pompe destinée à aspirer l'huile hors dudit au moins un système de filtre d'aspiration (12, 13), **caractérisé en ce que** le segment de conduite (17) forme une partie d'une conduite sous pression (16), par laquelle est évacuée l'huile aspirée par la pompe.

9. Système de filtre selon l'une quelconque des revendications précédentes, **caractérisé en ce que** la pièce complémentaire est soudée du côté de la cuve à huile.

10. Système de filtre selon l'une quelconque des revendications précédentes, **caractérisé en ce que** la pièce complémentaire est formée par la coque supérieure (132).

11. Système de filtre selon l'une quelconque des revendications précédentes, **caractérisé en ce que** sur la pièce complémentaire sont prévues une admission (161) et une sortie (162) pour la conduite d'huile.

12. Système de filtre selon l'une quelconque des revendications précédentes, **caractérisé en ce que** le segment de conduite (17) est disposé pour l'essentiel sur une paroi en coque (134b) de la coque inférieure (131).

13. Système de filtre selon l'une quelconque des revendications précédentes, **caractérisé en ce que** la pièce complémentaire est courbée avec une forme convexe par rapport au segment de conduite (17).

14. Système de filtre selon l'une quelconque des revendications précédentes, **caractérisé en ce que** le segment de conduite (17) est réalisé sous la forme d'un conduit et la pièce complémentaire est réalisée sous la forme d'un élément de recouvrement dudit conduit.

15. Système de filtre selon la revendication 14, **caractérisé en ce que** le conduit (17) comporte deux parois (164a, 164b) parallèles entre elles, lesquelles sont en saillie sur le fond de la cuve à huile (11).

16. Système de filtre selon la revendication 14 ou 15, **caractérisé en ce que** le conduit (17) entoure un creux (165) dans le fond de la cuve à huile (11).

17. Système de filtre selon l'une quelconque des revendications précédentes, **caractérisé en ce que** la conduite d'huile (16) est réalisée de telle sorte qu'elle résiste à une pression de 40 bars minimum.

18. Système de filtre selon l'une quelconque des revendications précédentes, **caractérisé en ce que** la coque supérieure (122) du filtre principal (12) et la coque supérieure (132) du filtre préliminaire (13) sont réalisées d'un seul tenant.

19. Système de filtre selon l'une quelconque des revendications précédentes, avec une pompe destinée à aspirer l'huile hors du filtre préliminaire (13), **caractérisé en ce que** des éléments de raccordement et de positionnement (136, 161) pour la réception par conjugaison de forme de la pompe sont disponibles sur la cuve à huile (11) ou sur le filtre préliminaire (13).

20. Système de filtre selon la revendication 19, **caractérisé en ce que** dans la cuve à huile (11), il est prévu un passage apte à être étanché, à travers lequel peut être guidée une ligne d'alimentation électrique pour la pompe.

21. Système de filtre selon la revendication 19, comportant une vis de sortie d'huile (15) dans la cuve à huile (11), **caractérisé en ce que** la vis de sortie d'huile (15) est réalisée de telle sorte qu'elle peut être utilisée au moins comme une partie d'une ligne d'alimentation électrique pour la pompe.
